# EUROPEAN PATENT SPECIFICATION

(11) **EP 2 648 260 B1**
(45) Date of publication and mention of the grant of the patent: **23.10.2019**
(21) Application number: 11845212.7
(22) Date of filing: 09.11.2011
(51) Int. Cl.: H01M 10/04, B32B 37/00

(54) **DEVICE FOR LAMINATING A SECONDARY BATTERY AND METHOD**
BESCHICHTUNGSVORICHTUNG FÜR EINE SEKUNDÄRBATTERIE UND VERFAHREN
DISPOSITIF POUR LAMINER UN ACCUMULATEUR SECONDAIRE ET PROCÉDÉ

(30) Priority: 02.12.2010 KR 20100122326
(43) Date of publication of application: 09.10.2013
(73) Proprietor: LG Chem, Ltd., Seoul 07336 (KR)
(72) Inventor: MIN, Ki Hong, Gwacheon-si Gyeonggi-do 427-735 (KR); HWANG, Sung Min, Cheongju-si Chungcheongbuk-do 361-300 (KR); CHO, Jihoon, Daejeon 305-340 (KR); JUNG, TaeYoon, Cheongwon-gun Chungcheongbuk-do 363-884 (KR); SON, Jeong Sam, Cheongju-si Chungcheongbuk-do 361-300 (KR); HAN, Changmin, Cheongju-si Chungcheongbuk-do 361-856 (KR); JUNG, Su Taek, Cheongju-si Chungcheongbuk-do 361-300 (KR); BAIK, Hyun-sook, Cheongju-si Chungcheongbuk-do 361-100 (KR); KIM, Sung Hyun, Cheongju-si Chungcheongbuk-do 361-270 (KR); KIM, Seok Jin, Seoul 100-761 (KR); SONG, Ki Hun, Hwaseong-si Gyeonggi-do 445-730 (KR); PARK, Sang Hyuck, Suwon-si Gyeonggi-do 431-070 (KR); LEE, Han Sung, Incheon 403-905 (KR); KIM, Byeong Geun, Anyang-si Gyeonggi-do 431-070 (KR)
(74) Representative: Hoffmann Eitle
(86) International application number: PCT/KR2011/008487
(87) International publication number: WO 2012/074219

(56) References cited:
- EP-A2- 0 786 331
- EP-A2- 1 561 387
- WO-A1-2006/042416
- WO-A2-02/091511
- DE-A1- 3 235 222
- JP-A- 2000 123 813
- JP-A- 2000 173 623
- JP-A- 2000 195 504
- JP-A- 2003 132 899
- JP-A- 2008 311 012
- KR-A- 20040 005 898
- US-A1- 2006 029 850
- US-A1- 2006 159 999
- US-A1- 2010 167 176

## Description

### [TECHNICAL FIELD]

The present invention relates to a novel device for laminating an electrode assembly and a secondary battery manufactured using the same. More specifically, the present invention relates to a device for laminating an electrode assembly comprising a cathode, an anode and a separator interposed therebetween laminated in this order by thermal bonding, the device comprising an inlet, through which a web having the cathode/separator/anode laminate structure is fed, a heater to heat the web and thereby induce thermal bonding between the cathode, the separator and the anode, an outlet through which the thermally bonded web is discharged, and a transporter to transport the web through the inlet, the heater and the outlet, wherein the transporter imparts a transport driving force to the web in a state that the transporter contacts at least one of the top and the bottom of the web and the heater directly heats a region of the transporter contacting the web and thereby transfers a thermal bonding energy to the web.

### [BACKGROUND ART]

Recently, rechargeable secondary batteries are widely used as energy sources or auxiliary power devices of wireless mobile devices. In addition, secondary batteries are drawing great attraction as power sources of electric vehicles (EVs), hybrid electric vehicles (HEVs), plug-in hybrid electric vehicles (PHEV) and the like suggested as alternatives to solve air contamination caused by conventional gasoline vehicles, diesel vehicles and the like using fossil fuels.

Such a secondary battery is manufactured in a state in which an electrode assembly is mounted in a battery case together with an electrolyte solution. Depending on manufacturing method, the electrode assembly is divided into a stack-type, a folding-type, a stack-folding type and the like. In the case of the stack type or stack-folding type electrode assembly, a unit assembly has a structure in which a cathode and an anode are laminated in this order such that a separator is interposed therebetween.

A lamination process to join electrodes to a separator is required in order to obtain such a unit assembly.

The lamination process generally includes adhering electrodes to the separator by heating the unit assembly. The heating for the lamination process is generally carried out by indirect heating using radiation and convection. Such indirect heating enables lamination during transport of the unit assembly since respective processes for manufacturing the secondary battery are intimately connected to one another.

However, the indirect heating by radiation and convection entails a long time for heating the unit assembly to a target temperature, as compared to direct heating in which heat is transported through direct contact.

Generally, in order to increase a process rate, the unit assembly moves over a long distance. For this reason, disadvantageously, the scale of the heating device should be increased and production costs are thus increased.

However, when direct heating for a short heating time is used in order to solve this problem, problems of decreased process rate and increased risk of occurrence of defects occur due to friction between the unit assembly and the heating portion.

Accordingly, there is a need for development of novel lamination devices. WO-A-2002/91511 describes an apparatus and a process for manufacturing a membrane electrode assembly for an electrochemical cell. The process comprises: feeding a sheet of ion exchange membrane material through a double belt press; feeding at least one electrode substrate through the double belt press; and applying heat and pressure to bond a portion of the membrane material and the electrode substrate within a process zone of the double belt press. The process can further comprise cutting a membrane electrode assembly, such as by longitudinal slitting to obtain strips of the desired width and/or cross-cutting of the strips to obtain a membrane electrode assembly of the desired length.

JP-A-2000 195504 describes a manufacturing device for an electrode material of a polymer battery. In the manufacturing device, a mainroll and a feedroll constitute a first pressure-contact section to form a bonded electrode material by bonding a fed negative electrode material and a fed positive electrode material. The mainroll and a niproll constitute a second pressure contact section to laminatedly bond the bonded electrode material and a following part thereof with the following part folded onto the former fed head part thereof. The bonded material, transported from the first pressure contact section, bends by a stopper element and then is led to the second pressure-contact section together with the following part by means of a guide element.

JP-A-2008 311012 describes a manufacturing device of an electrode material junction for a fuel cell. In the manufacturing device, an electrode material is jointed to both surfaces of an electrolyte film transported continuously. The device comprises a drive mechanism for transporting the electrolyte film in a specified direction, and a tensile relaxing mechanism which relaxes the tensile to the transportation direction of the electrolyte film. The drive mechanism comprises a plurality of drive system rollers, and the tensile relaxing mechanism comprises tensile relaxing devices provided respectively among the drive system rollers.

JP-A-2000 173623 relates to a porous nickel base material and an electrode for an alkaline secondary battery using the same. In the porous nickel base material, a porous nickel plate and a steel plate are jointed via a sintered body layer by an iron-nickel alloy and an iron-nickel alloy layer. The porous nickel plate is composed of a skeleton of a nickel sintered body, and a partial flat side surface of the skeleton becomes a contact plane.

### [DISCLOSURE]

### [TECHNICAL PROBLEM]

Therefore, the present invention has been made to solve the above problems and other technical problems that have yet to be resolved.

It is one object of the present invention to provide a lamination device that enables lamination of a separator and an electrode within a relatively short time without lowering a process rate.

It is another object of the present invention to provide a secondary battery that exerts superior operation properties using the lamination device.

### [TECHNICAL SOLUTION]

In accordance with one aspect of the present invention, provided is a device for laminating an electrode assembly including a cathode, an anode and a separator interposed therebetween laminated in this order by thermal bonding, the lamination device including: an inlet, through which a web having the cathode/separator/anode laminate structure is fed; a heater to heat the web and thereby induce thermal bonding between the cathode and the separator and the anode; an outlet through which the thermally bonded web is discharged; and a transporter to transport the web through the inlet, the heater and the outlet, wherein the transporter imparts a transport driving force to the web in a state that the transporter contacts at least one of the top and the bottom of the web. The heater directly heats a region of the transporter contacting the web and thereby transfers thermal bonding energy to the web. In use, a protective film is arranged between the web and the lamination device, and the heater and the transporter are arranged in an air-tight chamber. Also, in use, the protective film is collected, before the web is discharged through the outlet.

According to the present invention, the heater directly heats a region of the transporter contacting the web, thereby transferring a thermal bonding energy to the web. As a result, heating and transportation of the web can be performed at the same time and problems caused by friction, such as deterioration in process rate or occurrence of defects can be thus overcome.

For example, the web is a material wherein an electrode assembly having a structure, in which a cathode and an anode are laminated in this order such that a separator is interposed therebetween, is arranged on a separator extended in a longitudinal direction. Here, the separator has a porous structure, like the separator, thus allowing permeation of ions such as lithium ions while electrically isolating the cathode from the anode in the manufactured secondary battery.

Such a web is moved at a predetermined rate. Accordingly, in order to heat the web for a predetermined time, according to the relation equation of rate-time-distance, heating throughout a specific length is required. Accordingly, any transporter may be used for the lamination device according to the present invention so long as it contacts the web at a predetermined length and simultaneously performs heating and transport.

In a preferred embodiment, the transporter may include a pair of rollers that rotate in one direction and a rotation belt that is rotated by the rollers while contacting the web.

In this structure, the rollers and rotation belts rotated by the rollers can control a heating time by controlling the length of the central axis of the rollers.

As defined above, the transporter imparts a transport driving force to the web in a state that the transporter contacts at least one of the top and the bottom of the web, preferably, may impart a transport driving force to the web in a state that the transporter contacts the top and the bottom of the web.

Imparting a transport driving force to the web in a state that the transporter contacts both the top and the bottom of the web is preferred, as compared to the state that the transporter contacts either the top or the bottom thereof, in terms of stable transport.

In this structure, the separator is preferably arranged on both the top and the bottom of the web. When the electrode is exposed outside in the web, the cathode material and the anode material may be separated during transport.

In some cases, in order to prevent adhesion between the lamination device and the separator, an additional protective film may be arranged between the web and the lamination device.

In this case, any protective film may be used without limitation so long as it is not changed at a lamination temperature and is not adhered to a separator. For example, the separator may be a polyolefin film, a polyethylene film, a polycarbonate film, a rubber film or the like.

In a specific embodiment, the transporter may include a pair of first rollers arranged on the top of the web and a first rotation belt that contacts the top of the web and is rotated by the first rollers; and a pair of second rollers arranged on the bottom of the web and a second rotation belt that contacts the bottom of the web and is rotated by the second rollers.

Preferably, the rotation belt of the transporter may be heated by the heater.

In this case, the heater directly heats the rotation belt, which is a region where the transporter directly contacts the web, thereby minimizing unnecessary loss of heat energy.

Accordingly, the heater is preferably arranged adjacent to the region of the rotation belt that contacts the web so that the heater heats the rotation belt region that contacts the web.

Any rotation belt may be used regardless of the type thereof so long as it can conduct heat and has flexibility to the extent that it can be rotated by the roller.

Preferably, the rotation belt may be made of a metal material. In addition, in terms of the manufacturing cost of device, conduction of heat energy, easy maintenance and the like, stainless steel is more preferred among metal materials.

In the lamination device according to the present invention, a heater temperature is preferably 80 to 105°C. When the heater temperature is lower than 80°C, time required for reaching the lamination temperature may be lengthened. On the other hand, when the heater temperature is higher than 105°C, the protective film may be adhered to the surface of the transporter due to glass crystallization, thus making processing impossible.

For this reason, the heater temperature is more preferably 90 to 103°C.

In the lamination device according to the present invention, the transport rate of the web is preferably 400 to 450 mm/s.

The transport rate of the web may be suitably controlled depending on the process. However, preferably, the desired lamination is accomplished by allowing the web to pass through the lamination device at the transport rate defined above in order to prevent the lamination process from being a bottleneck of the overall process.

In this case, a temperature elevation rate of the web by the heater is preferably 20°C/sec or higher, more preferably 30°C/sec to 50°C/sec.

In order to perform lamination at the transport rate, there is a need for the separator or separator that reaches from room temperature to a target temperature of 64.5°C within 1.5 seconds. That is, in order to elevate the temperature by 30 to 45°C within 1.5 seconds, the elevation temperature rate is required.

The heater and the transporter are arranged in an air-tight chamber and the chamber temperature may be set to be 20 to 70°C higher than an air temperature.

When the heater and the transporter are exposed to the outside, loss of heat energy may occur. Accordingly, in order to prevent such loss, the heater and the transporter are arranged in the air-tight chamber and, preferably, an internal temperature of the chamber is set to be 20 to 70°C higher than air temperature so that loss of heat energy caused by the difference between the internal temperature of the chamber, and the temperature of the heater and the transporter can be minimized.

The present invention also provides a method of manufacturing an electrode assembly manufactured using the device.

The electrode assembly has a structure in which a cathode and an anode are laminated such that a separator is interposed therebetween.

For example, the cathode is produced by applying a slurry prepared by mixing a cathode mixture containing a cathode active material with a solvent such as NMP to a cathode current collector, followed by drying and rolling.

The cathode mixture may further optionally contain a component such as a conductive material, a binder or a filler in addition to the cathode active material.

The cathode active material is, as a substance that causes electrochemical reactions, a lithium transition metal oxide comprising two or more transition metals and examples thereof include, but are not limited to, layered compounds such as lithium cobalt oxide (LiCoO₂) or lithium nickel oxide (LiNiO₂) substituted with one or more transition metals; lithium manganese oxide substituted with one or more transition metals; lithium nickel oxide represented by the formula of LiNi_{1-y}M_{y}O₂ (in which M = Co, Mn, Al, Cu, Fe, Mg, B, Cr, Zn or Ga, the lithium nickel oxide including one or more elements among the elements, 0.01≤y≤0.7); lithium nickel cobalt manganese composite oxides represented by Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂ or Li_{1+z}Ni_{0.4}Mn_{0.4}Co_{0.2}O₂ (in which -0.5≤z≤0.5, 0.1≤b≤0.8, 0:1≤c≤0.8, 0≤d≤0.2, 0≤e≤0.2, b+c+d<1, M = Al, Mg, Cr, Ti, Si or Y, A = F, P or Cl); and olivine lithium metal phosphate represented by the formula of Li₁₊ₓM_{1-y}M'_{y}PO_{4-z}X_{z} (in which M = transition metal, preferably Fe, Mn, Co or Ni, M' = Al, Mg or Ti , X = F, S or N, -0.5≤x≤+0.5, 0≤y≤0.5, and 0≤z≤0.1).

The conductive material is commonly added in an amount of 1 to 30% by weight, based on the total weight of the mixture comprising the cathode active material. Any conductive material may be used without particular limitation so long as it has suitable conductivity without causing adverse chemical changes in the battery. Examples of conductive materials include conductive materials, including graphite; carbon blacks such as carbon black, acetylene black, Ketjen black, channel black, furnace black, lamp black and thermal black; conductive fibers such as carbon fibers and metallic fibers; metallic powders such as carbon fluoride powders, aluminum powders and nickel powders; conductive whiskers such as zinc oxide and potassium titanate; conductive metal oxides such as titanium oxide; and polyphenylene derivatives.

The binder is a component which enhances binding of an electrode active material to a conductive material and current collector. The binder is commonly added in an amount of 1 to 30% by weight, based on the total weight of the mixture comprising the cathode active material. Examples of the binder include polyvinylidene, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene propylene diene terpolymer (EPDM), sulfonated EPDM, styrene butadiene rubbers, fluororubbers and various copolymers.

The filler is a component optionally used to inhibit expansion of the electrode. Any filler may be used without particular limitation so long as it does not cause adverse chemical changes in the manufactured battery and is a fibrous material. Examples of the filler include olefin polymers such as polyethylene and polypropylene; and fibrous materials such as glass fibers and carbon fibers.

The cathode current collector is generally manufactured to have a thickness of 3 to 500 *µ*m. Any cathode current collector may be used without particular limitation so long as it has suitable conductivity without causing adverse chemical changes in the manufactured battery. Examples of the cathode current collector include stainless steel, aluminum, nickel, titanium, sintered carbon, and aluminum or stainless steel surface-treated with carbon, nickel, titanium or silver. These current collectors include fine irregularities on the surface thereof so as to enhance adhesion to electrode active materials. In addition, the current collectors may be used in various forms including films, sheets, foils, nets, porous structures, foams and non-woven fabrics.

For example, the anode is produced by applying a slurry prepared by mixing an anode mixture containing an anode active material with a solvent such as NMP to an anode current collector, followed by drying. The anode mixture may further optionally contain components such as a conductive material, a binder or a filler as mentioned above.

Examples of the anode active material include carbon and graphite materials such as natural graphite, artificial graphite, expanded graphite, carbon fiber, hard carbon, carbon black, carbon nanotubes, perylene, activated carbon; metals alloyable with lithium, such as Al, Si, Sn, Ag, Bi, Mg, Zn, In, Ge, Pb, Pd, Pt and Ti and compounds containing these elements; composites of carbon and graphite materials with a metal and a compound thereof; and lithium-containing nitrides. Of these, a carbon-based active material, a silicon-based active material, a tin-based active material, or a silicon-carbon-based active material is more preferred. The material may be used alone or in combination of two or more thereof.

The anode current collector is generally fabricated to have a thickness of 3 to 500 *µ*m. Any anode current collector may be used without particular limitation so long as it has suitable conductivity without causing adverse chemical changes in the battery. Examples of the anode current collector include copper, stainless steel, aluminum, nickel, titanium, sintered carbon, and copper or stainless steel surface-treated with carbon, nickel, titanium or silver, and aluminum-cadmium alloys. Similar to the cathode current collectors, the anode current collectors include fine irregularities on the surface thereof so as to enhance adhesion to electrode active materials. In addition, the current collectors may be used in various forms including films, sheets, foils, nets, porous structures, foams and non-woven fabrics.

The separator is interposed between the cathode and the anode. As the separator, an insulating thin film having high ion permeability and mechanical strength is used. The separator typically has a pore diameter of 0.01 to 10 *µ*m and a thickness of 5 to 300 *µ*m As the separator, sheets or non-woven fabrics made of an olefin polymer such as polypropylene and/or glass fibers or polyethylene, which have chemical resistance and hydrophobicity, are used. When a solid electrolyte such as a polymer is employed as the electrolyte, the solid electrolyte may also serve as both a separator and an electrolyte.

The present invention also provides a method of manufacturing a secondary battery having a structure in which the electrode assembly is sealed together with the lithium salt-containing non-aqueous electrolyte in a battery case.

The lithium salt-containing, non-aqueous electrolyte is composed of a non-aqueous electrolyte and a lithium salt and examples of preferred electrolytes include non-aqueous organic solvents, organic solid electrolytes, inorganic solid electrolytes and the like.

Examples of the non-aqueous solvent include non-protic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include nitrides, halides and sulfates of lithium such as Li₃N, Lil, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

The lithium salt is a material that is readily soluble in the above-mentioned non-aqueous electrolyte and examples thereof include LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imides.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further contain halogen-containing solvents such as carbon tetrachloride and ethylene trifluoride. Further, in order to improve high-temperature storage characteristics, the non-aqueous electrolyte may further contain carbon dioxide gas or the like.

The battery case may be a cylindrical can, a rectangular can or a pouch to which a lamination sheet is thermally bonded. Of these, the pouch-shaped case may be generally used due to advantages such as low weight, low manufacturing cost and easy shape change.

The laminate sheet includes an inner resin layer in which thermal bonding is performed, a barrier metal layer, and an outer resin layer that exerts durability.

The outer resin layer should have superior resistance to exterior environments, thus requiring a predetermined level or more of tensile strength and weather resistance. In this regard, a polymer resin for the outer coating layer may contain polyethylene naphthalate (PEN), polyethylene terephthalate (PET) or oriented nylon that exhibit superior tensile strength and weather resistance.

In addition, the outer coating layer is made of polyethylene naphthalate (PEN) and/or is provided at the outer surface thereof with a polyethylene terephthalate (PET) layer.

Polyethylene naphthalate (PEN) exhibits superior tensile strength and weather resistance even at a small thickness as compared to polyethylene terephthalate (PET) and is thus suitable for use as an outer coating layer.

The polymer resin for the inner resin layer may be a polymer resin that has a thermal bonding property (thermal adhesion property), low hygroscopicity of the electrolyte solution to prevent permeation of the electrolyte solution thereinto and is not expanded or deposited by the electrolyte solution and is more preferably a chlorinated polypropylene (CPP) film.

In a preferred embodiment, the laminate sheet according to the present invention may include an outer coating layer having a thickness of 5 to 40 *µ*m, a barrier layer having a thickness of 20 to 150 *µ*m, and an inner sealant layer having a thickness of 10 to 50 *µ*m. When the thicknesses of respective layers of the laminate sheet are excessively small, barrier performance of the materials and improvement in strength cannot be expected and, on the other hand, when the thicknesses are excessively large, disadvantageously, processability is deteriorated and thicknesses of sheets are increased.

A battery pack comprising two or more such secondary batteries is used as a unit battery for middle and large battery modules including a plurality of battery cells used as power sources of middle and large devices requiring high-temperature stability, long cycle characteristics and high rate characteristics and the like.

Examples of middle and large devices include, but are not limited to, power tools powered by battery-driven motors; electric vehicles including electric vehicles (EVs), hybrid electric vehicles (HEVs) and plug-in hybrid electric vehicles (PHEVs); electric two-wheeled vehicles including electric bikes (E-bikes), electric scooters (E-scooter); electric golf carts, electric power storage system and the like,
wherein, according to the claimed invention, the battery pack is preferably used as a power source of an EV, HEV, PHEV or electric power storage system.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic view illustrating a lamination device according to one embodiment of the present invention; and
FIG. 2 is a graph showing variation in temperature of a web according to contact heating.

Now, the present invention will be described in more detail with reference to the following examples. These examples are provided only to illustrate the present invention.

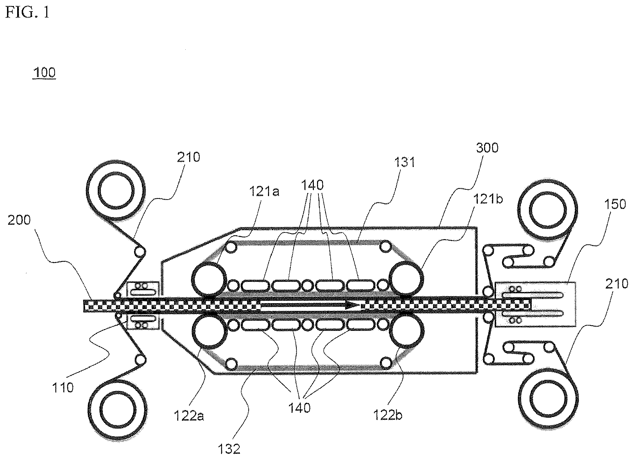

FIG. 1 is a schematic view illustrating a lamination device according to one embodiment of the present invention.

Referring to FIG. 1, the lamination device 100 includes an inlet 110 through which the web 200 is fed; first and second rotation belts 131 and 132 that contact the web 200 and perform transport; first and second rollers 121a, 121b, 122a and 122b that rotate the first and second rotation belts 131 and 132, respectively; a heater 140 that heats the first and second rotation belts 131 and 132 and thereby heats the web 200; and an outlet 150 through which the web 200 is discharged.

The web 200 is a component wherein a unit cell of an electrode assembly is arranged on a separator and the unit cell may be a full cell or a bi-cell (not shown).

As the unit cell, the full cell has a unit structure of cathode/separator/anode in which a cathode and an anode are arranged at both sides of the cell, respectively. Examples of such a full cell include a cathode/separator/anode cell (the most basic structure), cathode/separator/anode/separator/cathode/separator/anode and the like.

In addition, as the unit cell, the bi-cell is a cell in which identical electrodes are arranged at both sides of the cell, such as a cathode/separator/anode/separator/cathode unit structure or anode/separator/cathode/separator/anode unit structure. Generally, the cell having a cathode/separator/anode/separator/cathode structure is referred to as a "C-type bi-cell", and a cell having an anode/separator/cathode/separator/anode structure is referred to as an "A-type bi-cell". That is, a cell in which a cathode is arranged at both sides thereof is referred to as a "C-type bi-cell" and a cell in which an anode is arranged at both sides thereof is referred to as an "A-type bi-cell".

The numbers of the cathode, anode and separator constituting these bi-cells are not particularly limited so long as the electrodes arranged at both sides of the cells are identical.

Before the web 200 is fed through the inlet 110, a protective film 210 is arranged on the top and bottom of the web 200. The protective film 210 prevents, for example, separation of the cathode and anode materials which may occur when the electrode arranged on the top of the web 200 directly contacts the rotation belts 131 and 132 and prevents adhesion of the separator arranged on the bottom of the web 200 to the rotation belts 131 and 132. Such a protective film 210 is collected, before the laminated web is discharged through the outlet 150.

The first rollers 121a and 121b rotate in a counterclockwise direction, thus allowing the first rotation belt 131 to rotate in the counterclockwise direction, and thereby applying a transport force from the left to the right of the web 200. In addition, conversely to the first rollers 121a and 121b, the second rollers 122a and 122b rotate in a clockwise direction, thus allowing the second rotation belt 132 to rotate in the clockwise direction and thereby applying a transport force from the left to the right of the web 200.

The lamination device 100 is air tight with the chamber 300 during lamination. By performing lamination in the air-tight chamber 300, unnecessary loss of heat can be reduced and more efficient lamination can be achieved.

In order to reduce heat loss, the chamber 300 is set to a temperature 20 to 70°C higher than an air temperature.

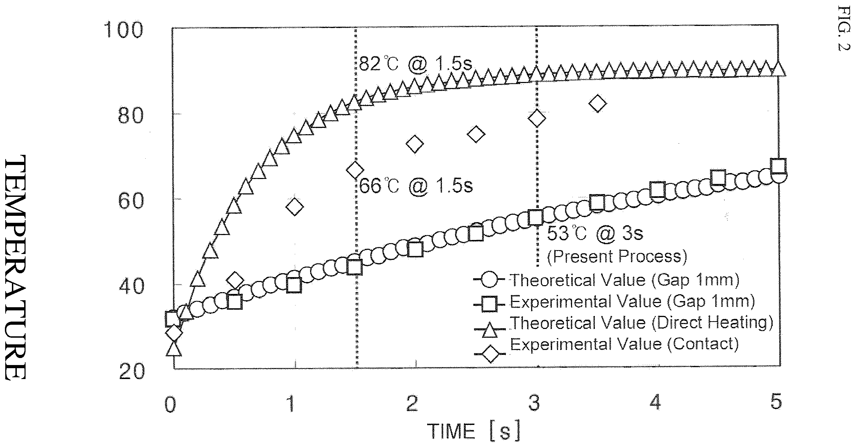

FIG. 2 is a graph showing variation in temperature of the web depending on contact heating.

Referring to FIG. 2, when the distance between the heater and the web is 1 mm, a theoretically analyzed value is equivalent to an experimental value and the temperature is elevated to 53°C within 3 seconds. In a case of direct heating, the theoretically analyzed value for temperature elevation was 82°C within 1.5 seconds. On the other hand, the experimental value obtained by actual direct heating was 66°C within 1.5 seconds. From these results, it can be seen that direct (contact) heating enables elevation to a target temperature two or more time faster than conventional indirect heating, thus reducing lamination time.

### [INDUSTRIAL APPLICABILITY]

As apparent from the afore-going, the lamination device according to the present invention performs heating and transport simultaneously while directly contacting the web, thereby completing lamination within a short time and contributing to improvement in overall process efficiency.

## Claims

1. A device (100) for laminating an electrode assembly comprising a cathode, an anode and a separator interposed therebetween laminated in this order by thermal bonding, the device comprising:
an inlet (110), through which a web (200) having the cathode/separator/anode laminate structure is fed,
a heater (40) to heat the web and thereby induce thermal bonding between the cathode, the separator and the anode;
an outlet (150), through which the thermally bonded web is discharged; and
a transporter (121a, 121b, 122a, 122b, 131, 132) to transport the web through the inlet, the heater and the outlet,
wherein the transporter imparts a transport driving force to the web in a state that the transporter contacts at least one of the top and the bottom of the web, and
**characterized in that**
the heater directly heats a region of the transporter contacting the web and thereby transfers slight thermal bonding energy to the web;
in use, a protective film (210) is arranged between the web and the lamination device;
the heater and the transporter are arranged in an air-tight chamber (300), and
in use, the protective film (210) is collected, before the web is discharged through the outlet (150).

2. The device according to claim 1, wherein the transporter comprises a pair of rollers (121a, 121b, 122a, 122b) that rotate in one direction and a rotation belt (131, 132) that is rotated by the rollers while the rotation belt contacts the web.

3. The device according to claim 1, wherein the transporter imparts a transport driving force to the web in a state that the transporter contacts both the top and the bottom of the web.

4. The device according to claim 3, wherein the transporter comprises:
a pair of first rollers (121a, 121b) arranged on the top of the web and a first rotation belt (131) that contacts the top of the web and is rotated by the first rollers; and
a pair of second rollers (122a, 122b) arranged on the bottom of the web and a second rotation belt (132) that contacts the bottom of the web and is rotated by the second rollers.

5. The device according to claim 2, wherein the rotation belt of the transporter is heated by the heater.

6. The device according to claim 5, wherein the heater is arranged adjacent to a region of the rotation belt contacting the web so that the heater heats the region of the rotation belt contacting the web.

7. The device according to claim 2, wherein the rotation belt is made of a metal material.

8. The device according to claim 7, wherein the rotation belt is made of stainless steel.

9. The device according to claim 1, wherein a temperature of the heater is 80 to 105°C.

10. The device according to claim 1, wherein a transport rate of the web is 400 to 450 mm/s.

11. The device according to claim 1, wherein a temperature elevation rate of the web by the heater is 20°C/sec or more.

12. The device according to claim 11, wherein a temperature elevation rate of the web by the heater is 30°C/sec to 50°C/sec.

13. The device according to claim 1, wherein the air-tight chamber is set at a temperature 20 to 70°C higher than an air temperature.

14. A method of manufacturing an electrode assembly using the device according to any one of claims 1 to 13, the electrode assembly having a structure in which a cathode and an anode are laminated such that a separator is interposed therebetween.

15. A method of manufacturing a secondary battery, wherein an electrode assembly obtained by the method according to claim 14 is sealed together with an electrolyte solution in a battery case.

## Patentansprüche

1. Vorrichtung (100) zum Beschichten einer Elektrodenmontage, umfassend eine Kathode, eine Anode und einen Separator, der dazwischen eingesetzt ist, in dieser Reihenfolge durch thermisches Binden beschichtet, wobei die Vorrichtung umfasst:
einen Einlass (110), durch den eine Bahn (200), die die Kathoden-/Separator-/Anoden-Beschichtungsstruktur aufweist, zugeführt wird,
einen Heizer (40), zum Aufheizen der Bahn und dadurch Induzieren einer thermischen Bindung zwischen der Kathode, dem Separator und der Anode;
einen Auslass (150), durch den die thermisch gebundene Bahn ausgebracht wird; und
einen Transporter (121a, 121b, 122a, 122b, 131, 132) zum Transportieren der Bahn durch den Einlass, den Heizer und den Auslass,
wobei der Transporter eine Transportantriebskraft auf die Bahn in einem Zustand ausübt, dass der Transporter mindestens eine von der Oberseite und der Unterseite der Bahn berührt, und
**dadurch gekennzeichnet, dass**
der Heizer direkt eine Region des Transporters aufheizt, die die Bahn berührt, und dadurch eine geringfügige thermische Bindungsenergie auf die Bahn überträgt;
im Betrieb eine Schutzfolie (210) zwischen der Bahn und der Beschichtungsvorrichtung angeordnet ist;
der Heizer und der Transporter in einer luftdichten Kammer (300) angeordnet sind, und
die Schutzfolie (210) im Betrieb eingesammelt wird, bevor die Bahn durch den Auslass (150) ausgebracht wird.

2. Vorrichtung nach Anspruch 1, wobei der Transporter ein Paar Rollen (121a, 121b, 122a, 122b) umfasst, die sich in eine Richtung drehen und ein Drehband (131, 132), das von den Rollen zum Drehen gebracht wird, während das Drehband die Bahn berührt.

3. Vorrichtung nach Anspruch 1, wobei der Transporter eine Transportantriebskraft auf die Bahn in einem Zustand ausübt, dass der Transporter sowohl die Oberseite als auch die Unterseite der Bahn berührt.

4. Vorrichtung nach Anspruch 3, wobei der Transporter umfasst:
ein Paar erster Rollen (121a, 121b), die auf der Oberseite der Bahn angeordnet sind, und ein erstes Drehband (131), das die Oberseite der Bahn berührt und durch die ersten Rollen zum Drehen gebracht wird; und
ein Paar zweiter Rollen (122a, 122b), die auf der Unterseite der Bahn angeordnet sind, und ein zweites Drehband (132), das die Unterseite der Bahn berührt und durch die zweiten Rollen zum Drehen gebracht wird.

5. Vorrichtung nach Anspruch 2, wobei das Drehband des Transporters durch den Heizer aufgeheizt wird.

6. Vorrichtung nach Anspruch 5, wobei der Heizer angrenzend an eine Region des Drehbandes angeordnet ist, die die Bahn berührt, sodass der Heizer die Region des Drehbandes, die die Bahn berührt, aufheizt.

7. Vorrichtung nach Anspruch 2, wobei das Drehband aus einem Metallwerkstoff gefertigt ist.

8. Vorrichtung nach Anspruch 7, wobei das Drehband aus nichtrostendem Stahl gefertigt ist.

9. Vorrichtung nach Anspruch 1, wobei eine Temperatur des Heizers 80 bis 105 °C beträgt.

10. Vorrichtung nach Anspruch 1, wobei eine Transportrate der Bahn 400 bis 450 mm/s beträgt.

11. Vorrichtung nach Anspruch 1, wobei eine Temperaturanstiegsrate der Bahn durch den Heizer 20 °C/sec oder mehr beträgt.

12. Vorrichtung nach Anspruch 11, wobei eine Temperaturanstiegsrate der Bahn durch den Heizer 30 °C/sec bis 50 °C/sec beträgt.

13. Vorrichtung nach Anspruch 1, wobei die luftdichte Kammer auf eine Temperatur um 20 bis 70 °C höher als eine Lufttemperatur gesetzt wird.

14. Verfahren zum Herstellen einer Elektrodenmontage unter Verwendung der Vorrichtung nach einem der Ansprüche 1 bis 13, wobei die Elektrodenmontage eine Struktur aufweist, bei der eine Kathode und eine Anode beschichtet werden, sodass ein Separator dazwischen eingesetzt ist.

15. Verfahren zum Herstellen einer Sekundärbatterie, wobei eine Elektrodenmontage, die durch das Verfahren nach Anspruch 14 erhalten wird, gemeinsam mit einer Elektrolytlösung in einem Batteriegehäuse eingeschlossen wird.

## Revendications

1. Dispositif (100) pour stratifier un ensemble électrode comprenant une cathode, une anode et un séparateur interposé entre ces dernières, stratifiés dans cet ordre par liaison thermique, le dispositif comprenant :
une entrée (110), à travers laquelle une bande (200) présentant la structure stratifiée cathode/séparateur/anode est introduite,
un dispositif de chauffage (40) pour chauffer la bande et induire de ce fait une liaison thermique entre la cathode, le séparateur et l'anode ;
une sortie (150), à travers laquelle la bande thermiquement liée est déchargée ; et
un transporteur (121a, 121b, 122a, 122b, 131, 132) pour transporter la bande à travers l'entrée, le dispositif de chauffage et la sortie,
dans lequel le transporteur confère une force d'entraînement de transport à la bande dans un état où le transporteur entre en contact avec au moins un du sommet et du fond de la bande, et
**caractérisé en ce que**
le dispositif de chauffage chauffe directement une région du transporteur entrant en contact avec la bande et transfère de ce fait une légère énergie de liaison thermique à la bande ;
lors de l'utilisation, un film protecteur (210) est agencé entre la bande et le dispositif de stratification ;
le dispositif de chauffage et le transporteur sont agencés dans une chambre hermétique (300) ; et
lors de l'utilisation, le film protecteur (210) est recueilli, avant que la bande ne soit déchargée à travers la sortie (150).

2. Dispositif selon la revendication 1, dans lequel le transporteur comprend une paire de rouleaux (121a, 121b, 122a, 122b) qui tourne dans un sens particulier et une courroie de rotation (131, 132) qui est mise en rotation par les rouleaux tandis que la courroie de rotation entre en contact avec la bande.

3. Dispositif selon la revendication 1, dans lequel le transporteur confère une force d'entraînement de transport à la bande dans un état où le transporteur entre en contact tant avec le sommet qu'avec le fond de la bande.

4. Dispositif selon la revendication 3, dans lequel le transporteur comprend :
un couple de premiers rouleaux (121a, 121b) agencés sur le sommet de la bande et une première courroie de rotation (131) qui entre en contact avec le sommet de la bande et est mise en rotation par les premiers rouleaux ; et
un couple de seconds rouleaux (122a, 122b) agencés sur le fond de la bande et une seconde courroie de rotation (132) qui entre en contact avec le fond de la bande et est mise en rotation par les seconds rouleaux.

5. Dispositif selon la revendication 2, dans lequel la courroie de rotation du transporteur est chauffée par le dispositif de chauffage.

6. Dispositif selon la revendication 5, dans lequel le dispositif de chauffage est agencé adjacent à une région de la courroie de rotation entrant en contact avec la bande de sorte que le dispositif de chauffage chauffe la région de la courroie de rotation entrant en contact avec la bande.

7. Dispositif selon la revendication 2, dans lequel la courroie de rotation est faite d'une matière métallique.

8. Dispositif selon la revendication 7, dans lequel la courroie de rotation est faite d'acier inoxydable.

9. Dispositif selon la revendication 1, dans lequel une température du dispositif de chauffage est de 80 à 105 °C.

10. Dispositif selon la revendication 1, dans lequel une vitesse de transport de la bande est de 400 à 450 mm/s.

11. Dispositif selon la revendication 1, dans lequel une vitesse d'élévation de température de la bande par le dispositif de chauffage est de 20 °C/s ou plus.

12. Dispositif selon la revendication 11, dans lequel une vitesse d'élévation de température de la bande par le dispositif de chauffage est de 30 °C/s à 50 °C/s.

13. Dispositif selon la revendication 1, dans lequel la chambre hermétique est mise à une température de 20 à 70 °C plus élevée qu'une température de l'air.

14. Procédé de fabrication d'un ensemble électrode en utilisant le dispositif selon l'une quelconque des revendications 1 à 13, l'ensemble électrode présentant une structure dans laquelle une cathode et une anode sont stratifiées de sorte qu'un séparateur est interposé entre ces dernières.

15. Procédé de fabrication d'une batterie rechargeable, dans lequel un ensemble électrode obtenu par le procédé selon la revendication 14 est scellé en même temps qu'une solution d'électrolyte dans un boîtier de batterie.
